(19) Europäisches Patentamt
European Patent Office
Office européen des brevets

(11) EP 3 303 506 B1

(12) FASCICULE DE BREVET EUROPEEN

(45) Date de publication et mention de la délivrance du brevet:
**24.07.2024 Bulletin 2024/30**

(21) Numéro de dépôt: **16727171.7**

(22) Date de dépôt: **02.06.2016**

(51) Classification Internationale des Brevets (IPC):
***C09K 8/035*** (2006.01) ***C09K 8/40*** (2006.01)
***C09K 8/467*** (2006.01) ***C09K 8/68*** (2006.01)
***C09K 8/72*** (2006.01) ***C09K 8/88*** (2006.01)
***C04B 24/16*** (2006.01) ***C04B 28/04*** (2006.01)
***C08F 2/38*** (2006.01) ***C08F 293/00*** (2006.01)

(52) Classification Coopérative des Brevets (CPC):
(C-Sets disponibles)
**C09K 8/487; C04B 24/163; C04B 28/04; C08F 2/38; C08F 293/00; C08F 293/005; C09K 8/035; C09K 8/40; C09K 8/467; C09K 8/68; C09K 8/88;** C04B 2103/0061; C04B 2103/408; C04B 2103/46 (Cont.)

(86) Numéro de dépôt international:
**PCT/EP2016/062439**

(87) Numéro de publication internationale:
**WO 2016/193334 (08.12.2016 Gazette 2016/49)**

(54) **POLYMERES AMPHIPHILES POUR LE CONTROLE DU FILTRAT**

AMPHIPHILE POLYMERE ZUR FILTRATKONTROLLE

AMPHIPHILIC POLYMERS FOR FILTRATE CONTROL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2015 FR 1501147**

(43) Date de publication de la demande:
**11.04.2018 Bulletin 2018/15**

(73) Titulaire: **Energy Solutions (US) LLC**
**Princeton, NJ 08540 (US)**

(72) Inventeurs:
- **CADIX, Arnaud**
**93400 Saint Ouen (FR)**
- **WILSON, David James**
**60580 Coye La Foret (FR)**

(74) Mandataire: **Osha BWB**
**2, rue de la Paix**
**75002 Paris (FR)**

(56) Documents cités:
**WO-A1-2013/060741 WO-A1-2014/167056**
**WO-A1-2015/049378**

- **JOHANN PLANK ET AL: "Effect of different anchor groups on adsorption behavior and effectiveness of poly(N,N-dimethylacrylamide-co-Ca 2-acrylamido-2-methylpropanesulfonate) as cement fluid loss additive in presence of acetone-formaldehyde-sulfite dispersant", vol. 106, no. 6, 4 September 2007 (2007-09-04), pages 3889 - 3894, XP002693166, Retrieved from the Internet <URL:http://onlinelibrary.wiley.com/doi/10.1002/app.26897/abstract> [retrieved on 20070904], DOI: 10.1002/APP.26897**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C04B 28/04, C04B 24/163, C04B 2103/50**

## Description

La présente invention a trait au domaine de l'extraction pétrolière. Plus précisément, elle concerne des agents assurant un effet de contrôle du filtrat dans des fluides injectés sous pression dans des formations souterraines.

Dans le domaine de l'extraction pétrolière, de nombreuses étapes sont conduites en injectant des fluides sous pression au sein de formations souterraines. Dans la présente description, la notion de « *formation souterraine* » s'entend dans son acception la plus large et inclut aussi bien une roche contenant des hydrocarbures, notamment du pétrole, que les différentes couches de roche traversées pour accéder à cette roche pétrolifère et assurer l'extraction des hydrocarbures. Au sens de la présente description, la notion de « *roche* » est utilisée pour désigner tout type de matériau constitutif d'une formation souterraine solide, que le matériau la constituant soit, ou non, une roche à proprement parler. Ainsi, en particulier, l'expression « roche pétrolifère » est employée ici comme synonyme de « *réservoir pétrolifère* » et désigne toute formation souterraine contenant des hydrocarbures, notamment du pétrole, quelle que soit la nature du matériau contenant ces hydrocarbures (roche ou sable par exemple).

Parmi les fluides injectés sous pression dans des formations souterraines, on peut notamment citer les différents fluides de complétion et reconditionnement des puits, notamment les fluides de forage , qu'ils soient utilisés pour accéder à la roche pétrolière ou bien pour forer le réservoir lui-même (« *drill in* ») ou bien les fluides de fracturation, ou bien encore les fluides de complétion, les fluides de contrôle ou de reconditionnement (« *workover fluids* ») ou les fluides d'annulaire ou fluides de « *packer* ».

Un cas spécifique est celui des coulis de ciment pétrolier, qui sont employés pour la cimentation de l'annulaire des puits pétroliers selon une méthode bien connue en soi, décrite par exemple dans Le Forage par J.P Nguyen (Editions Technip 1993). Ces coulis de ciment pétroliers sont injectés sous pression dans l'intérieur d'un tubage métallique (cuvelage) introduit dans le trou de forage des puits de pétrole puis remontent, sous l'effet de la pression par l'espace dit « annulaire » (« *annulus* » en anglais) situé entre le cuvelage et le trou de forage puis prennent et durcissent dans cet annulaire, assurant ainsi la stabilité du puits en cours de forage.

Au sein d'un puits d'extraction pétrolière, la mise en contact du fluide sous pression et de la formation souterraine (qui présente le plus souvent une porosité plus ou moins élevée, voire des fissures) induit un effet dit de « *perte de fluide* » dit également de « *filtrat* » (phénomène désigné par le terme de « *fluid loss* » en anglais) : le liquide présent dans le fluide a tendance à pénétrer dans la roche constitutive de la formation souterraine, ce qui peut endommager le puits, voire nuire à son intégrité. Lorsque ces fluides employés sous pression contiennent des composés insolubles (ce qui est très souvent le cas, notamment pour les coulis de ciment pétrolier ou bien les fluides de forages ou de fracturation), l'effet de perte de fluide induit en parallèle des risques de perte de contrôle des fluides injectés une augmentation de la concentration en composés insolubles du fluide, ce qui peut conduire à une augmentation de viscosité affectant la mobilité du fluide.

Dans le cas particulier d'un coulis de ciment, la perte de fluide peut en outre induire une agrégation ou gélification du coulis, avant que l'espace de l'annulaire soit remplis par le coulis, ce qui peut, entre autres, fragiliser la structure du puits et nuire à son étanchéité.

Pour plus de détails concernant l'effet de perte de fluide et ses effets en cimentation, on pourra notamment se reporter à Weil Cementing, E.B. Nelson (Elsevier, 2006).

En vue d'inhiber le phénomène de perte de fluide, il a été décrit un certain nombre d'additifs qui permettent de limiter (voir d'empêcher totalement dans certains cas) la fuite du liquide présent dans le fluide vers la roche avec laquelle il entre en contact. Ces additifs, dits « *agents de contrôle du filtrat* » (ou « *fluid loss control agents* » en anglais) permettent en général d'obtenir, en parallèle, un effet de contrôle de la migration de gaz, à savoir une isolation du fluide vis-à-vis des gaz contenus dans la roche (gaz dont il convient d'éviter qu'ils ne pénètrent le fluide notamment dans le cas de coulis de ciment, ces gaz ayant tendance à fragiliser le ciment en cours de prise).

Divers agents de contrôle du filtrat du type précité ont été proposés, qui incluent notamment des dérivés cellulosiques (hydroxyéthylcellulose, par exemple) ou bien encore des copolymères hydrophiles à base d'AMPS comme ceux décrits par exemple dans US 4,632,186 ou US 4,515,635. Ces additifs ne sont pas toujours pleinement adaptés pour assurer, en pratique, une limitation efficace de la perte de fluide. En particulier, et c'est notamment le cas dans le domaine des coulis de ciment pétrolier, la présence d'autres additifs peut inhiber l'effet des agents employés pour assurer le contrôle du filtrat. En particulier, en présence de certains agents dispersants ou agents retardateurs de prise, les agents de contrôle du filtrat précités voient en général leurs propriétés se dégrader.

Il est décrit dans WO 2015/049378, l'emploi d'un polymère dibloc hydrophile à titre d'agent de contrôle du filtrat, à savoir, un bloc court (A) lié à un bloc long (B). Le bloc court assure l'effet d'ancrage avec les particules de ciment et le bloc B assure l'effet d'augmentation locale de la viscosité du fluide autour des particules.

Un but de la présente invention est de fournir de nouveaux agents de contrôle du filtrat pour des fluides injectés sous pression dans des formations souterraines.

A cet effet, la présente invention propose d'utiliser, à titre d'agent de contrôle du filtrat dans un fluide (F) aqueux injecté sous pression dans une formation souterraine, de copolymères séquencés (P) comprenant

- au moins une chaîne (C) soluble dans le fluide (F) aqueux, i.e., hydrosoluble ; et
- une pluralité de blocs (B) non solubles dans le fluide (F) aqueux, i.e., hydrophobes, chaque bloc (B) étant formé d'une séquence hydrophobe de taille sensiblement identique ;

où la chaîne (C) est obtenue par polymérisation micellaire, et comprend une chaîne majoritairement formée d'unités hydrophiles et interrompue en différents endroits par la pluralité de séquences hydrophobes (B) de taille sensiblement identique.

Le polymère utilisé selon l'invention est un copolymère amphiphile, en ce sens qu'il comporte :

- la chaîne (C) qui est une chaîne soluble dans le fluide (F) aqueux, ayant typiquement une solubilité à 20°C supérieure ou égale à 0,5% (5 000 ppm), de préférence supérieure ou égale à 1% dans le fluide (F) aqueux
- chaque bloc (B) qui est une séquence polymère non soluble dans le fluide (F) aqueux ayant typiquement une solubilité à 20°C inférieure ou égale à 0,1% (1 000 ppm) dans le fluide (F) aqueux.

Le bloc (B) est intégré dans la chaine (C). La chaîne (C) est globalement soluble mais contient une pluralité de séquences non solubles. De préférence, les séquences non solubles représentent entre 0,05 et 5% de la masse totale de la chaîne (C).

Le contrôle du filtrat opéré selon l'invention est obtenu dans le cadre d'une extraction pétrolière et il permet de limiter voire inhiber totalement la fuite du fluide (F) aqueux, typiquement de l'eau ou une composition aqueuse dans la formation souterraine où on effectue l'extraction. Ce contrôle du filtrat peut notamment être obtenu lorsque les polymères de l'invention sont employés avec des particules, mais un contrôle du filtrat peut être également obtenu en absence de particules. Lorsque les polymères sont employés avec des particules, il peut s'agir de particules présentes au sein de la formation souterraine et/ou de particules injectées au sein de la formation souterraine, typiquement conjointement avec les copolymères (comme par exemple, des particules de ciment dans le cas d'un fluide employé en cimentation).

La chaîne (C) est de type obtenu par polymérisation micellaire. La chaîne (C) est donc globalement soluble et comprend une chaîne majoritairement formée d'unités hydrophiles et interrompue en différents endroits par une pluralité de séquences hydrophobes (B) de taille sensiblement identique. Le polymère de l'invention peut être constitué par la chaîne (C) ou bien être un copolymère à blocs où la chaîne (C) constitue un des blocs.

La polymérisation micellaire consiste schématiquement à effectuer une polymérisation de monomères hydrophiles dans un milieu hydrophile comprenant des micelles incluant des monomères hydrophobes. Des exemples de polymérisation micellaire ont notamment été décrits dans US 4,432,881 ou bien encore dans Polymer, vol. 36, N°16, pp. 3197-3211 (1996), auxquels on pourra se reporter pour plus de détails.

On peut typiquement employer selon l'invention une polymérisation micellaire, où on copolymérise (typiquement par voie radicalaire) au sein d'un milieu dispersant aqueux (typiquement de l'eau ou un mélange eau/alcool):

- des monomères hydrophiles à l'état solubilisé ou dispersé dans ledit milieu ;
  et
- des monomères hydrophobes au sein de micelles de tensioactif formées dans ledit milieu en y introduisant ce tensioactif à une concentration supérieure à sa concentration micellaire critique (cmc).

De préférence, le taux de monomères hydrophobes correspondant au rapport de la masse des monomères hydrophobes rapportés à la masse totale des monomères hydrophobes et hydrophiles est supérieur ou égal à 0,05%, de préférence supérieur à 0,1 %, voire supérieur à 0,2% ; et inférieur ou égal à 5%. En général, le pourcentage des unités hydrophobes dans la chaîne (C) est du même ordre, typiquement supérieur ou égal à 0,05%, de préférence supérieur à 0,1%, voire supérieur à 0,2% ; et inférieur ou égal à 5%.

Selon un mode particulier, les monomères hydrophobes présents au sein de micelles de tensioactifs employés en polymérisation micellaire peuvent être des monomères qui, en eux-mêmes ont la propriété de former des micelles sans avoir besoin d'ajouter des tensioactifs additionnels (monomères dits «auto-micellisables»). Selon ce mode particulier, le tensioactif employé peut être le monomère hydrophobe auto-micellisable lui-même, employé sans autre tensioactif, bien que la présence d'un tel tensioactif additionnel ne soit pas exclue. Ainsi, au sens de la présente description, lorsqu'il est fait mention de monomères hydrophobes au sein de micelles de tensioactifs, cette notion englobe aussi bien (i) des monomères hydrophobes présent au sein de micelles de tensioactif autre que ces monomères que (ii) des monomères comprenant au moins une partie ou un bloc hydrophobe et formant par eux-mêmes les micelles en milieu aqueux. Les deux modes (i) et (ii) précités sont compatibles et peuvent coexister (monomères hydrophobes au sein de micelles formées par un autre monomère auto-micellisables par exemple, ou bien encore micelles comprenant une association de tensioactifs et de monomères auto-micellisables).

En polymérisation micellaire, les monomères hydrophobes contenus dans les micelles sont dits en "solution

micellaire". La solution micellaire à laquelle il est fait référence est un système micro-hétérogène qui est généralement isotrope, optiquement transparent et thermodynamiquement stable.

A noter qu'une solution micellaire du type de celle employée en polymérisation micellaire est à distinguer d'une microémulsion. En particulier, contrairement à une microémulsion, une solution micellaire se forme à toute concentration dépassant la concentration micellaire critique du tensioactif employé, avec comme seule condition que le monomère hydrophobe soit soluble au moins en une certaine mesure au sein de l'espace interne des micelles. Une solution micellaire se différencie par ailleurs d'une émulsion de par l'absence de phase homogène interne : les micelles contiennent un très faible nombre de molécules (moins de 1000 typiquement, en général moins de 500 et typiquement de 1 à 100, avec le plus souvent 1 à 50 monomères et au plus quelques centaines de molécules de tensioactif lorsqu'un tensioactif est présent) et la solution micellaire a en général des propriétés physiques similaires à celles des micelles de tensioactif sans monomères. Par ailleurs le plus souvent, une solution micellaire est transparente vis-à-vis de la lumière visible, compte tenu de la faible taille des micelles qui ne conduit pas à des phénomènes de réfraction, contrairement aux gouttes d'une émulsion, qui réfractent la lumière et lui confère son aspect trouble ou blanc caractéristique.

La technique de polymérisation micellaire conduit à des polymères séquencés caractéristiques qui contiennent chacun plusieurs blocs hydrophobes sensiblement de même taille et où cette taille peut être contrôlée. En effet, compte tenu du cantonnement des monomères hydrophobes au sein des micelles, chacun des blocs hydrophobes contient sensiblement un même nombre $n_H$ défini de monomères hydrophobes, ce nombre nH pouvant être calculé comme suit (Macromolecular Chem. Physics, 202, 8, 1384-1397, 2001) :

$$nH = N_{agg} \,.\, [M_H] / ( [\text{tensioactif}] - \text{cmc})$$

où :

$N_{agg}$ est le nombre d'agrégation (nombre d'agrégation) du tensioactif, qui reflète le nombre de tensioactif présent dans chaque micelle

$[M_H]$ est la concentration molaire en monomère hydrophobe dans le milieu et [tensioactif] est la concentration molaire en tensioactif dans le milieu cmc est la concentration (molaire) micellaire critique.

La technique de polymérisation micellaire permet ainsi un contrôle intéressant des motifs hydrophobes introduit dans les polymères formés, à savoir :

- un contrôle global de la fraction molaire d'unités hydrophobes dans le polymère (en modulant le rapport des concentrations des deux monomères); et
- un contrôle plus spécifique du nombre d'unités hydrophobes présentes dans chacun des blocs hydrophobes (en modifiant les paramètres influençant le $n_H$ défini ci-dessus).

La chaîne (C) globalement soluble dans le fluide (F), qui est obtenue par polymérisation micellaire comporte :

- une composante hydrophile, constituée par les monomères hydrophiles, qui correspond à une chaîne polymère hydrophile qui aurait une solubilité typiquement supérieure ou égale à 1% (10 000 ppm) à 20°C si elle était seule introduite dans le fluide (F),
- une composante hydrophobe, constituée par les séquences hydrophobes, ayant chacune une solubilité typiquement inférieure ou égale à 0,1% (1 000 ppm) à 20°C dans le fluide (F).

Dans beaucoup de cas, la chaîne (C) peut être décrite comme une chaîne hydrophile ayant la solubilité précitée (au moins 1%) sur laquelle sont greffée des groupements hydrophobes pendants. Notamment dans ce cas, la chaîne (C) a globalement une solubilité à 20°C dans le fluide (F) qui reste de préférence supérieure ou égale à 0,1% voire 0,5%.

Selon un mode de réalisation particulier, la chaîne (C) est de type obtenu par un procédé comprenant une étape (e) de polymérisation radicalaire micellaire dans laquelle on met en contact, au sein d'un milieu aqueux (M) :

- des monomères hydrophiles, solubilisés ou dispersés dans ledit milieu aqueux (M) (typiquement de l'eau ou un mélange eau/alcool) ;

- des monomères hydrophobes sous la forme d'une solution micellaire, à savoir contenant, à l'état dispersé au sein du milieu (M), des micelles comprenant ces monomères hydrophobes (cet état dispersé pouvant notamment être obtenu à l'aide d'au moins un tensioactif) ; et

- au moins un amorceur de polymérisation radicalaire, cet amorceur étant typiquement hydrosoluble ou hydrodispersible.

Selon un mode de réalisation préférentiel, la chaîne (C) est de type obtenu par un procédé comprenant une étape (E) de polymérisation radicalaire micellaire dans laquelle on met en contact, au sein d'un milieu aqueux (M) :

- des monomères hydrophiles, solubilisés ou dispersés dans ledit milieu aqueux (M) (typiquement de l'eau ou un mélange eau/alcool) ;

- des monomères hydrophobes sous la forme d'une solution micellaire, à savoir contenant, à l'état dispersé au sein du milieu (M), des micelles comprenant ces monomères hydrophobes (cet état dispersé pouvant notamment être obtenu à l'aide d'au moins un tensioactif) ;

- au moins un amorceur de polymérisation radicalaire, cet amorceur étant typiquement hydrosoluble ou hydrodispersible ; et

- au moins un agent de contrôle de polymérisation radicalaire.

L'étape (E) est similaire à l'étape (e) précitée mais met en oeuvre un agent de contrôle additionnel. Cette étape, connue sous le nom de « polymérisation radicalaire micellaire à caractère contrôlé », a notamment été décrite dans WO 2013/060741. On pourra utiliser ici toutes les variantes décrites dans ce document.

Par *"agent de contrôle de polymérisation radicalaire"*, on entend, au sens de la présente description, un composé capable de rallonger le temps de vie des chaînes polymères en croissance dans une réaction de polymérisation et de conférer à la polymérisation un caractère vivant ou contrôlé. Cet agent de contrôle est typiquement un agent de transfert réversible tel que mis en oeuvre dans les polymérisations radicalaires contrôlées désignés sous la terminologie RAFT ou MADIX, qui mettent typiquement en oeuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. D'autres types d'agent de contrôle peuvent être envisagés (par exemple du type de ceux employé en CRP ou en ATRP).

Selon un mode particulier, l'agent de contrôle employé dans l'étape (E) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie MADIX.

Alternativement, l'agent de contrôle employé dans l'étape (E) est un composé non polymère porteur d'un groupement assurant le contrôle de la polymérisation radicalaire, notamment un groupe thiocarbonylthio -S(C=S)-.

Selon une variante particulière, l'agent de contrôle de polymérisation radicalaire employé dans l'étape (E) est un polymère, avantageusement un oligomère, à caractère hydrosoluble ou hydrodispersible et porteur d'un groupe thiocarbonylthio -S(C=S)-, par exemple d'un groupe xanthate -SC=S-O-). Ce polymère, propre à agir à la fois comme agent de contrôle de la polymérisation et comme monomère dans l'étape (E), est également désigné par « pré-polymère » dans la suite de la description. Typiquement, ce pré-polymère est obtenu par polymérisation radicalaire de monomères hydrophiles en présence d'un agent de contrôle porteur d'un groupe thiocarbonylthio -S(C=S)-, par exemple un xanthate. Ainsi, par exemple, selon un mode de réalisation intéressant qui est illustré à la fin de la présente description, l'agent de contrôle employé dans l'étape (E) peut avantageusement être un pré-polymère porteur d'un groupe thiocarbonylthio -S(C=S)-, par exemple d'un groupe xanthate -SC=S-O-, obtenu à l'issue d'une étape ($E^0$) de polymérisation radicalaire contrôlée préalable à l'étape (E). Dans cette étape ($E^0$), on peut typiquement mettre en contact des monomères hydrophiles, avantageusement identiques à ceux mis en oeuvre dans l'étape (E) ; un amorceur de polymérisation radicalaire ; et un agent de contrôle porteur d'un groupe thiocarbonylthio -S(C=S)-, par exemple un xanthate.

La mise en oeuvre de l'étape (E°) précité préalablement à l'étape (E) permet, schématiquement, d'hydrophiliser un grand nombre d'agent de contrôle porteurs de fonctions thiocarbonylthio (par exemple des xanthate, qui sont plutôt hydrophobes par nature), en les convertissant des pré-polymères solubles ou dispersibles dans le milieu (M) de l'étape (E). De préférence, un pré-polymère synthétisé dans l'étape ($E^0$) possède une chaîne polymère courte, par exemple comprenant un enchaînement de moins de 50, voire moins de 25 unités monomères, par exemple entre 2 et 15.

Lorsqu'on met en oeuvre l'étape (E) les polymères selon l'invention comprennent des chaînes (C) qui possèdent

une structure dite « contrôlée », à savoir, que toutes les chaînes (C) présentes sur les polymères ont sensiblement la même taille et la même structure. Les chaînes (C) comprennent notamment les blocs (B) sensiblement en même nombre et proportion.

Le polymère (P) spécifique employé dans le cadre de la présente invention, de par la présence des séquences hydrophobes dans une chaîne de polymère hydrophile s'avère fournir un effet de contrôle du fluide particulièrement efficace : sans vouloir être lié par une théorie, il semble que les unités hydrophobes au sein d'une chaîne hydrophile et/ou des chaînes hydrophiles différentes ont tendance à s'associer entre elles. On obtient ainsi en quelque sorte un « bouchon » au niveau des porosités de la roche, qui permet de limiter, voire de bloquer totalement, le phénomène de filtration.

En outre, il a été mis en évidence que cet effet de contrôle du filtrat était assuré lorsque les interactions hydrophobes entre polymères et entre le polymère et les particules (p) sont suffisamment fortes et nombreuses dans le cas où les polymères sont employés avec les particules, ou lorsque les interactions hydrophobes entre polymères sont suffisamment fortes et nombreuses dans le cas où les polymères sont employés sans les particules.

Pour cela, selon un mode de réalisation de l'invention, le nombre nH est égal ou supérieur à 3, de préférence supérieur à 4, par exemple supérieur à 6.

Le nombre nH est généralement inférieur à 30.

Selon un mode de réalisation préférentiel, le nombre nH est compris entre 6 et 20 (bornes incluses).

Selon une première variante de l'invention, le fluide (F) injecté comprend le polymère (P) mais ne comprend pas de particules solides (p), et il rencontre lesdites particules (p) au sein de la formation souterraine suite à son injection. L'association entre particules et polymères se fait alors *in situ.* Un tel fluide peut par exemple être injecté lors d'une opération de forage, et les déblais de roche formés lors du forage assurent alors le rôle des particules (p) *in situ.*

Selon une variante alternative, le fluide (F) injecté comporte avant l'injection au moins une partie, et en général la totalité, des particules (p) associées au polymère (P), étant entendu qu'il peut éventuellement rencontrer d'autres particules (p) au sein de la formation souterraine.

Deux modes sont notamment envisageables dans ce cadre :

- <u>mode 1</u> : le polymère (P) et les particules (p) sont mélangés lors de la formulation du fluide (F), sur le lieu de l'exploitation ou en amont, typiquement en additionnant les particules (p), à l'état sec ou éventuellement à l'état dispersé, à une composition comprenant le polymère (P) en solution. Selon cette variante, le fluide (F) peut par exemple être un coulis de ciment pétrolier, que l'on prépare en ajoutant de la poudre de ciment à titre de particules (p) dans une composition aqueuse comprenant le polymère (P) en solution.

- <u>mode 2</u> : le fluide (F) est fabriqué, avantageusement sur le lieu de l'exploitation, à partir d'une composition (pré-mélange) préparée en amont (désignée ci-après par le terme de « *blend* ») comprenant le polymère (P) et au moins une partie des particules (p), en général au sein d'un liquide dispersant. Pour former le fluide (F), ce *blend* est mélangé aux autres constituants du fluide (F).

Dans le cadre de ces modes 1 et 2, le polymère (P) présente accessoirement l'avantage non négligeable d'améliorer la dispersibilité et la mise en suspension des particules (p). Dans certains modes de réalisation, les polymères (P) associés aux particules (p) peuvent être employés principalement en tant qu'agent dispersant et stabilisant de la dispersion des particules (p), en assurant dans le même temps un effet d'agent de contrôle du filtrat.

Différents avantages et modes de réalisation particuliers de l'invention vont maintenant être décrits plus en détails.

### *Le fluide (F) aqueux*

Par « *fluide* » aqueux, on entend, au sens de la description tout milieu aqueux, homogène ou non, comprenant un vecteur liquide ou visqueux transportant éventuellement une phase dispersée, liquide ou gélifiée, et/ou des particules solides, ledit milieu étant globalement pompable au moyen des dispositifs d'injection sous pression utilisés dans l'application considérée.

Par « *vecteur liquide ou visqueux*» du fluide (F), on entend le fluide lui-même ; ou bien le solvant dans le cas où le fluide comprend des composés dissous et/ou la phase continue dans le cas où le fluide contient des éléments dispersés (gouttelettes de phase dispersée liquide ou gélifiée, particules solides...).

Le fluide (F) est un fluide aqueux. Par « aqueux », on entend ici que le fluide comprend à titre de vecteur liquide ou visqueux de l'eau, soit à titre d'unique constituant du vecteur liquide ou visqueux, soit en association avec d'autres solvants hydrosolubles.

En cas de présence de solvants autres que l'eau dans le vecteur liquide ou visqueux du fluide (F), l'eau reste avantageusement le solvant majoritaire au sein du vecteur liquide ou visqueux, présent avantageusement à raison d'au

moins 50% en masse, voire d'au moins 75% en masse par rapport à la masse totale des solvants dans le vecteur liquide ou visqueux.

***Les particules (p)***

La notion de « particule » au sens où elle est employée dans la présente description ne se cantonne pas à celle de particules individualisées. Elle désigne de façon plus générale des entités solides dispersables au sein d'un fluide, sous la forme d'objets (particules individuelles, agrégats ...) dont toutes les dimensions sont inférieures à 5 mm, de préférence à 2 mm, par exemple inférieures à 1 mm.
Les particules (p) selon l'invention peuvent être choisi parmi : carbonate de calcium ou de ciment, silice ou de sable, d'argile, de noir de carbone et/ou de leur mélanges.
Selon un mode de réalisation particulier de l'invention, les particules (p) sont des carbonate de calcium ou de ciment.

***Les polymères (P)***

***Les monomères hydrophiles***

La chaîne (C) peut typiquement comprendre des monomères choisis parmi :

- les acides carboxyliques éthyléniquement insaturés, les acides sulfoniques et les acides phosphoniques, et/ou ses dérivés tels que l'acide acrylique (AA), l'acide méthacrylique, l'acide éthacrylique, l'acide α-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyl, l'acide vinylsulfonique, l'acide (meth)allylsulfonique, l'acrylate de sulfoéthyl, le méthacrylate de sulfoéthyl, l'acrylate de sulfopropyl, le méthacrylate de sulfopropyl, 1-allyloxy-2-hydroylpropyl sulfonate, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide α-methyl vinylphosphonique, et l'acide allylphosphonique;

- les esters d'acides mono- et di-carboxyliques α,β-éthyléniquement insaturés avec C2-C3-alcanediols, par exemple, l'acrylate de 2-hydroxyethyl, le méthacrylate de 2-hydroxyethyl, l'éthacrylate de 2-hydroxyethyl, l'acrylate de 2-hydroxypropyl, le méthacrylate de 2-hydroxypropyl, l'acrylate de 3-hydroxypropyl, le méthacrylate de 3-hydroxypropyl et les (meth)acrylates de polyalkylène glycol;

- les amides d'acides mono-carboxyliques α,β-éthyléniquement insaturés et leurs dérivés N-alkyl et N,N-dialkyl tels que l'acrylamide, le méthacrylamide, le N-méthyl(meth)acrylamide, le N-ethyl(meth)acrylamide, le N-isopropyl(meth)acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant) ;

- le N-vinyllactames et ses dérivés, par exemple, le N-vinylpryolidone, le N-vinylpiperidone ;

- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;

- les esters d'acides mono- et di-carboxyliques α,β-éthyléniquement insaturés avec les aminoalcools, par exemple, le (meth)acrylate de N,N-diméthylaminométhyl, le (meth)acrylate de N,N-dimethylaminoethyl, l'acrylate de N,N-diéthylaminoéthyl, et le (meth)acrylate de N,N-dimethylaminopropyl;

- les amides d'acides mono- et di-carboxyliques α,β-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide, le N-[4-(dimethylamino)butyl]acrylamide et le N-[4-(dimethylamino)butyl]methacrylamide ;

- les N-diallylamines, les N,N-diallyl-N-alkylamines, leurs sels d'additions d'acide et leurs produits de quaternisation,

l'alkyl employé ici étant préférentiellement C1-C3-alkyle ;

- les composés du N,N-diallyl-N-methylamine et du N,N-diallyl-N,N-dimethylammonium, par exemple, les chlorures et les bromures ;

- les hétérocylces azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;

- les sulphobétaines ; et

- les sels des monomères précités ;

- les mélanges et association de deux ou plusieurs des monomères et/ou leurs sels précités.

Selon un mode de réalisation particulier, ces monomères peuvent notamment comprendre de l'acide acrylique (AA).

Selon un autre mode de réalisation, les monomères hydrophiles de la chaîne (C) comprennent (et typiquement sont constitués de) monomères (meth)acrylamide, ou plus généralement des monomères (meth)acrylamido, incluant :

- les monomères acrylamido, à savoir, l'acrylamide (Am), le diméthylacrylamide (DMA), son dérivé sulfonate, notamment des acides acrylamidométhylpropanesulfonique (AMPS),
- l'ammonium quaternaire (APTAC) et le sulfopropyl diméthylammonium propyl acrylamide ;
- les monomères methacrylamido, tels que, le sulfopropyl diméthylammonium propyl méthacrylamide (SPP), le sulfohydroxypropyl diméthyl ammonium propyl méthacrylamido.

Selon un mode de réalisation particulier, les monomères hydrophiles de la chaîne (C) sont des acrylamides. Un acrylamide est de préférence un acrylamide non stabilisé par du cuivre.

Selon un mode de réalisation spécifique, les monomères hydrophiles de la chaîne (C) sont choisis parmi des acrylamides, des diméthylacrylamides (DMA), des acides acrylamidométhylpropanesulfoniques (AMPS), des acides acryliques (AA), leurs sels et leurs mélanges.

Selon un mode de réalisation spécifique, les monomères hydrophiles de la chaîne (C) peuvent typiquement avoir une fonction polymérisable de type acrylamido, et une chaîne latérale composée d'enchaînements oxyde d'éthylène ou oxyde de propylène, ou bien à base de N-isopropylacrylamide, ou de N-vinylcaprolactame..

***Les monomères hydrophobes***

A titre d'exemple non limitatif de monomères hydrophobes constituant les blocs non solubles utilisables selon l'invention, on peut notamment citer :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrene, le 4-(n-decyl)styrene, le tert-butylstyrène ;

- les composés vinyliques halogénés, tels que halogénures de vinyle ou de vinylidène, comme des chlorures ou fluorures de vinyle ou de vinylidene, répondant à la formule $R_bR_cC=CX^1X^2$,

  où : $X^1$ = F ou Cl
  $X^2$ = H, F ou Cl
  chacun de $R_b$ et $R_c$ représente, indépendamment :

  - H, Cl, F ; ou
  - un groupe alkyle, de préférence chloré et/ou fluoré, plus avantageusement perchloré ou perfluoré ;

  - les esters d'acide mono-, di-carboxylique $\alpha,\beta$ éthyléniquement insaturés avec C2-C30-alcanols, par exemple, l'ethacrylate de methyl, le (meth)acrylate d'ethyl, l'ethacrylate d'ethyl, le (meth)acrylate de n-propyl, le (meth)acrylate d'isopropyl, le (meth)acrylate de n-butyl, le (meth)acrylate de sec-butyl, le (meth)acrylate de tert-butyl, l'ethacrylate de tert-butyl, le (meth)acrylate de n-hexyl, le (meth)acrylate de n-heptyl, le (meth)acrylate de n-octyl, le (meth)acrylate de 1,1,3,3-tetramethylbutyl, le (meth)acrylate d'ethylhexyl, le (meth)acrylate de n-nonyl, le (meth)acrylate de n-decyl, le (meth)acrylate de n-undecyl, le (meth)acrylate de tridecyl, le (meth)acrylate de myristyl, le (meth)acrylate de pentadecyl, le (meth)acrylate de palmityl, le (meth)acrylate de heptadecyl, le (meth)acrylate de nonadecyl, le (meth)acrylate d'arachinyl, le (meth)acrylate de behenyl, le (meth)acrylate de lignoceryl, le (meth)acrylate de cerotinyl, le (meth)acrylate de melissinyl, le (meth)acrylate de palmitoleoyl, le (meth)acrylate d'oleyl, le (meth)acrylate de linolyl, le (meth)acrylate de linolenyl, le (meth)acrylate de stearyl, le (meth)acrylate de lauryl et leurs mélanges ;

- les esters d'alcool de vinyl ou d'allyl avec les acides monocarboxyliques en C1-C30, par exemple, le vinyl formate, le vinyl acétate, le vinyl propionate, le vinyl butyrate, le vinyl laurate, le vinyl stéarate, le vinyl propionate, le vinyl versatate et leurs mélanges ;

- les nitriles éthyléniquement insaturés, tels que l'acrylonitrile, le methacrylonitrile et leurs mélanges ;

- les esters d'acides mono- et di-carboxyliques $\alpha,\beta$ éthyléniquement insaturés avec l'alcanediols en C3-C30, par exemple, l'acrylate de 3-hydroxybutyl, le méthacrylate de 3-hydroxybutyl, l'acrylate de 4-hydroxybutyl, le méthacrylate de 4-hydroxybutyl, l'acrylate de 6-hydroxyhexyl, le méthacrylate de 6-hydroxyhexyl, l'acrylate 3-hydroxy-2-ethylhexyl et le méthacrylate de 3-hydroxy-2-ethylhexyl etc ;

- les amides primaires d'acides mono- et di-carboxyliques $\alpha,\beta$ éthyléniquement insaturés et les dérivés de N-alkyl et N,N-dialkyl, tels que le N-propyl(meth)acrylamide, le N-(n-butyl)(meth)acrylamide, le N-(tert-butyl)(meth)acrylamide, le N-(n-octyl)(meth)acrylamide, le N-(1,1,3,3-tetramethylbutyl)(meth)acrylamide, le N-ethylhexyl(meth)acrylamide, le N-(n-nonyl)(meth)acrylamide, le N-(n-decyl)(meth)acrylamide, le N-(n-undecyl)(meth)acrylamide, le N-tridecyl(meth)acrylamide, le N-myristyl(meth)acrylamide, le N-pentadecyl(meth)acrylamide, le N-palmityl(meth)acrylamide, le N-heptadecyl(meth)acrylamide, le N-nonadecyl(meth)acrylamide, le N-arachinyl(meth)acrylamide, le N-behenyl(meth)acrylamide, le N-lignoceryl(meth)acrylamide, le N-cerotinyl(meth)acrylamide, le N-melissinyl(meth)acrylamide, le N-palmitoleoyl(meth)acrylamide, le N-oleyl(meth)acrylamide, le N-linolyl(meth)acrylamide, le N-linolenyl(meth)acrylamide, le N-stearyl(meth)acrylamide et le N-lauryl(meth)acrylamide ;

- les N-vinyllactams et ses dérivées tels que, le N-vinyl-5-ethyl-2-pyrrolidone, le N-vinyl-6-methyl-2-piperidone, le N-vinyl-6-ethyl-2-piperidone, le N-vinyl-7-methyl-2-caprolactam et le N-vinyl-7-ethyl-2-caprolactam, etc ;

- les esters d'acides mono- et di-carboxyliques $\alpha,\beta$ éthyléniquement insaturés avec aminoalcools, par exemple, le (meth)acrylate de N,N-dimethylaminocyclohexyl;

- les amides d'acides mono- et di-carboxyliques $\alpha,\beta$ éthyléniquement insaturés avec diamines comprenant au moins un groupe amino primaire ou secondaire, par exemple, le N-[4-(dimethylamino)butyl]acrylamide, le N-[4-(dimethylamino)butyl]methacrylamide, le N-[2-(diethylamino)ethyl]acrylamide, le N-[4-(dimethylamino)cyclohexyl]acrylamide, le N-[4-(dimethylamino)cyclohexyl]methacrylamide etc ; et

- les monooléfins en C2-C8 et les hydrocarbons nonaromatiques comprenant au moins deux bonds doubles conjugués par exemple, l'éthylène, le propylène, l'isobutylène, l'isoprène, le butadiène, etc .

Selon un mode de réalisation préférentielle, les monomères hydrophobes employés selon l'invention, peuvent être choisis parmi :

- les esters alpha-bêta insaturés d'alkyle en C1-C30 alkyle, de préférence d'alkyle en C4-C22, en particulier les acrylates et méthacrylate d'alkyle, comme les acrylates et méthacrylate de méthyle, ethyle, butyle, 2-étylhexyl, isoactyle, lauryle, isodécyle ou stéaryle (le méthacrylate de lauryle en particulier s'avère notamment intéressant) ;

- les amides alpha-bêta insaturés d'alkyle en C1-C30 alkyle, de préférence d'alkyle en C4-C22, en particulier les acrylamide et méthacrylamide d'alkyle, comme les méthyle, ethyle, butyle, 2-étylhexyl, isoactyle, lauryle, isodécyle ou stéaryle acrylamide et methacrylamide (le lauryle methacrylamide en particulier s'avère notamment intéressant) ;

- les esters de vinyle ou d'alcool allylique d'acides carboxyliques saturés tels que les acétate, propionate, versatate, ou stéarate de vinyle ou d'allyle ;

- les nitriles alpha-bêta insaturés contenant de 3 à 12 atomes de carbone, comme l'acrylonitrile ou le methacrylonitrile,

- les alpha oléfines et les diènes conjugués ;
- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrene, le 4-(n-decyl)styrene, le tert-butylstyrène ;
- les mélanges et association de deux ou plusieurs des monomères précités.

Selon un mode de réalisation intéressant, notamment lorsque le fluide (F) est un fluide de fracturation, on peut utiliser des monomères hydrophobes qui se lient de façon faible à la chaîne (C). Ceci permet au besoin d'éliminer les polymères introduits au sein de la formation souterraine (compte tenu de leur caractère amphiphile, les polymères de l'invention ont en général un caractère auto-associatif, et tendent à former des gels difficilement éliminables. Sous l'effet notamment de la température et/ou du pH, on peut cliver les monomères hydrophobes si ceux-ci ne sont liés de façon trop forte au polymère, ce qui permet une élimination du fluide.) Des monomères hydrophobes adaptés à ce mode de réalisation sont notamment les esters précités.

A noter que lorsqu'on utilise d'autres monomères, une élimination des fluide est toujours possible par une technique connue en soi où on ajoute des « casseurs » (dénommés en anglais *breakers*), tels que des oxydants. Le mode précédent permet de s'affranchir d'utilisation de tels « casseurs », ce qui se traduit notamment en termes de diminution de cout.

Selon un mode de réalisation particulier, les polymères synthétisés de l'invention peuvent présenter une masse moléculaire supérieure à 600 000 g/mol, de préférence supérieure à 1 000 000 g/mol, voire allant jusqu'à 2 000 000.

Selon un mode de réalisation particulier, les polymères peuvent présenter une masse moléculaire supérieure ou égale à 2 000 000 g/mol, par exemple entre 2 000 000 et 3 000 000 g/mol, voire allant jusqu'à 4 000 000 g/mol.

***L'agent de contrôle de polymérisation radicalaire***

L'agent de contrôle mis en oeuvre dans l'étape (E) ou, le cas échéant, dans l'étape ($E^0$) du procédé de l'invention est avantageusement un composé porteur d'un groupe thiocarbonylthio -S(C=S)-. Selon un mode de réalisation particulier, l'agent de contrôle peut être porteur de plusieurs groupes thiocarbonylthio. Il peut éventuellement s'agir d'une chaîne polymère porteuse d'un tel groupe.

Ainsi, cet agent de contrôle peut par exemple répondre à la formule (A) ci-dessous :

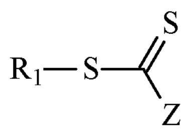

(A)

dans laquelle :

- Z représente :
  - un atome d'hydrogène,
  - un atome de Chlore,
  - un radical alkyl éventuellement substitué, aryl éventuellement substitué,
  - un hétérocycle éventuellement substitué,
  - un radical alkylthio éventuellement substitué,
  - un radical arylthio éventuellement substitué,
  - un radical alkoxy éventuellement substitué,
  - un radical aryloxy éventuellement substitué,
  - un radical amino éventuellement substitué,
  - un radical hydrazine éventuellement substitué,
  - un radical alkoxycarbonyl éventuellement substitué,
  - un radical aryloxycarbonyl éventuellement substitué,
  - un radical carboxy, acyloxy éventuellement substitué,
  - un radical aroyloxy éventuellement substitué,
  - un radical carbamoyle éventuellement substitué,
  - un radical cyano,

- un radical dialkyl- ou diaryl-phosphonato,
- un radical dialkyl-phosphinato ou diaryl-phosphinato, ou
- une chaîne polymère,

et

- $R_1$ représente :
  - un groupe alkyle, acyle, aryle, aralkyle, alcène ou alcyne éventuellement substitué,
  - un cycle carboné ou un hétérocycle, saturé ou non, aromatique éventuellement substitué, ou
  - une chaîne polymère, de préférence hydrophile ou hydrodispersible lorsque l'agent est mis en oeuvre dans l'étape (E).

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturés ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maléimido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Pour les agents de contrôle de formule (A) mis en oeuvre dans l'étape (E), on préfère en général que le groupe R1 soit de nature hydrophile. Avantageusement, il s'agit d'une chaîne polymère hydrosoluble ou hydrodispersible.

Le groupe R1 peut alternativement être amphiphile, à savoir présenter à la fois un caractère hydrophile et lipophile. Il est préférable que R1 ne soit pas hydrophobe.

Concernant les agents de contrôle de formule (A) mis en oeuvre dans l'étape ($E^0$), $R_1$ peut typiquement être un groupe alkyle substitué ou non, de préférence substitué. Un agent de contrôle de formule (A) mis en oeuvre dans l'étape ($E^0$) peut néanmoins comprendre d'autres types de groupes $R_1$, notamment un cycle ou une chaîne polymère

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryles, on peut notamment citer le radical phényle, éventuellement substitué notamment par une fonction nitro ou hydroxyle.

Parmi les radicaux aralkyles, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Avantageusement, on utilise comme agent de contrôle pour l'étape (E), ainsi que pour l'étape (E°) le cas échéant, des composés porteurs d'une fonction xanthate -S(C=S)O-, trithiocarbonate, des dithiocarbamate, ou dithiocarbazate, par exemple porteurs d'une fonction O-ethyl xanthate de formule $-S(C=S)OCH_2CH_3$.

Lorsque l'étape ($E^0$) est conduite, il est notamment intéressant d'employer à titre d'agents de contrôle dans cette étape un composé choisi parmi les xanthates, les trithiocarbonates, les dithiocarbamates, ou les dithiocarbazates. Les xanthates se révèlent tout particulièrement intéressants, notamment ceux porteur d'une fonction O-ethyl xanthate $-S(C=S)OCH_2CH_3$, comme le O-ethyl-S-(1-methoxycarbonyl ethyl) xanthate ($(CH_3CH(CO_2CH_3))S(C=S)OEt$. Un autre agent de contrôle possible dans l'étape ($E^0$) est le dibenzyltrithiocarbonate de formule $PhCH_2S(C=S)SCH_2Ph$ (où Ph=phényle).

Les pré-polymères vivants obtenus dans l'étape (E°) en utilisant les agents de contrôle précités s'avèrent particulièrement intéressants pour la conduite de l'étape (E).

*Amorçage et conduite des polymérisations radicalaires des étapes (E) et ($E^0$)*

Lorsqu'il est mis en oeuvre dans l'étape (E) l'amorceur de la polymérisation radicalaire est de préférence hydrosoluble ou hydrodispersible. Hormis cette condition préférentielle, on peut employer dans l'étape (E) et l'étape ($E^0$) du procédé de l'invention tout amorceur de polymérisation radicalaire (source de radicaux libres) connu en soi et adapté aux conditions choisies pour ces étapes.

Ainsi, l'amorceur (initiateur) de polymérisation radicalaire employé selon l'invention peut par exemple être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Typiquement, la quantité d'initiateur à utiliser est déterminée de préférence de manière à ce que la quantité de radicaux générés soit d'au plus 50 % en mole, de préférence d'au plus 20% en mole, par rapport à la quantité d'agent de contrôle ou de transfert.

Tout particulièrement dans l'étape (E), il s'avère généralement intéressant d'utiliser un amorceur radicalaire de type redox, qui présente, entre autres, l'avantage de ne pas nécessiter un chauffage du milieu réactionnel (pas d'amorçage thermique) et dont les inventeurs ont en outre maintenant découvert qu'il se révèle adapté à la polymérisation micellaire de l'étape (E).

Ainsi, l'amorceur de polymérisation radicalaire employé l'étape (E) peut typiquement être un amorceur redox, typiquement ne nécessitant pas de chauffage pour leur amorçage thermique. Il s'agit typiquement d'un mélange d'au moins un agent oxydant avec au moins un agent réducteur.

L'agent oxydant présent dans ce système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,

- les mélanges de bromates hydrosolubles (bromate de métaux alcalins par exemple) avec des sulfites hydrosolubles (sulfites de métaux alcalins par exemple),

- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs, et

- les persulfates de métal alcalin en association avec un acide arylphosphinique, tel que l'acide benzène phosphonique et autres similaires, et des sucres réducteurs.

Un système redox intéressant comprend (et de préférence consiste en) l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA, en une quantité propre à masquer sa présence.

Quelle que soit la nature de l'amorceur employé, la polymérisation radicalaire de l'étape ($E^0$) peut être effectuées sous toute forme physique appropriée, par exemple en solution dans l'eau ou dans un solvant par exemple un alcool ou le THF, en émulsion dans l'eau (procédé dit "latex"), en masse, le cas échéant en contrôlant la température et/ou le pH afin de rendre des espèces liquides et/ou solubles ou insolubles.

Après mise en oeuvre de l'étape (E), compte tenu de la mise en oeuvre spécifique d'un agent de contrôle, on obtient des polymères fonctionnalisés par des groupes de transfert (polymères vivants). Ce caractère vivant permet si on le souhaite, d'employer ces polymères dans une réaction de polymérisation ultérieure, selon une technique bien connue en soi. Alternativement, au besoin, il est possible de désactiver ou de détruire les groupes de transfert, par exemple par hydrolyse, ozonolyse, ou réaction avec des amines, selon des moyens connus en soi. Ainsi, selon un mode de réalisation particulier, le procédé de l'invention peut comprendre, après l'étape (E), une étape (E1) d'hydrolyse, d'ozonolyse ou de réaction avec des amines, propre à désactiver et/ou détruire tout ou partie des groupes de transfert présents sur le polymère préparé dans l'étape (E).

***Tensioactifs***

Pour réaliser la solution micellaire des monomères hydrophobes employés dans l'étape (E), on peut employer tout tensioactif adapté, à titre non limitatif, on peut par exemple, employer les tensioactifs choisis dans la liste suivante :

- Les tensioactifs anioniques peuvent être choisis parmi:

  les alkylesters sulfonates, par exemple de formule $R-CH(SO_3M)-CH_2COOR'$, ou les alkylesters sulfates, par exemple de formule $R-CH(OSO_3M)-CH_2COOR'$, où R représente un radical alkyle en $C_8$-$C_{20}$, de préférence en $C_{10}$-$C_{16}$, R' un radical alkyle en $C_1$-$C_6$, de préférence en $C_1$-$C_3$ et M un cation alcalino-terreux, par exemple sodium, ou le cation ammonium. On peut citer tout particulièrement les méthyl ester sulfonates dont le radical R est en $C_{14}$-$C_{16}$;

  les alkylbenzènesulfonates, plus particulièrement en $C_9$-$C_{20}$, les alkylsulfonates primaires ou secondaires, notamment en $C_8$-$C_{22}$, les alkylglycérol sulfonates ;

  les alkylsulfates par exemple de formule $ROSO_3M$, où R représente un radical alkyle ou hydroxyalkyle en $C_{10}$-$C_{24}$, de préférence en $C_{12}$-$C_{20}$ ; M un cation de même définition que ci-dessus ;

  les alkyléthersulfates par exemple de formule $RO(OA)_nSO_3M$ où R représente un radical alkyle ou hydroxyalkyle en $C_{10}$-$C_{24}$, de préférence en $C_{12}$-$C_{20}$ ; OA représentant un groupement éthoxylé et/ou propoxylé ; M représentant un cation de même définition que ci-dessus, n variant généralement de 1 à 4, comme par exemple le lauryléthersulfate avec n = 2 ;

les alkylamides sulfates, par exemple de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un cation de même définition que ci-dessus, ainsi que leurs dérivés polyalcoxylés (éthoxylés et/ou propoxylés) (alkylamidoether sulfates ;

les sels d'acides gras saturés ou insaturés, par exemple comme ceux en $C_8$-$C_{24}$, de préférence en $C_{14}$-$C_{20}$ et d'un cation alcalino-terreux, les N-acyl N-alkyltaurates, les alkyliséthionates, les alkylsuccinamates et alkylsulfo succinates, les alkyl glutamates, les monoesters ou diesters de sulfosuccinates, les N-acyl sarcosinates, les polyéthoxycarboxylates ;

les mono et di esters phosphates, par exemple de formule suivante : $(RO)_x$-P(=O)$(OM)_x$ ou R représente un radical alkyle, alkylaryle, arylalkyle, aryle, éventuellement polyalcoxylés, x et x' étant égaux à 1 ou 2, à la condition que la somme de x et x' soit égale à 3, M représentant un cation alcalino-terreux ;

- Les tensioactifs non ioniques peuvent être choisis parmi: les alcools gras alcoxylés ; par exemple les laureth-2, laureth-4, laureth-7, oleth-20, les triglycérides alcoxylés, les acides gras alcoxylés, les esters de sorbitan alcoxylés, les amines grasses alcoxylées, les di(phényl-1 éthyl) phénols alcoxylés, les tri(phényl-1 éthyl) phénols alcoxylés, les alkyls phénols alcoxylés, les produits résultant de la condensation de l'oxyde d'éthylène avec un composé hydrophobe résultant de la condensation de l'oxyde de propylène avec le propylène glycol, tels les Pluronic commercialisés par BASF ; les produits résultant de la condensation de l'oxyde d'éthylène le composé résultant de la condensation de l'oxyde de propylène avec l'éthylènediamine, tels les Tetronic commercialisés par BASF ; les alkylpolyglycosides comme ceux décrits dans US 4565647 ou les alkylglucosides; les amides d'acides gras par exemple en $C_8$-$C_{20}$, notamment les monoalkanolamides d'acides gras, par exemple la cocamide MEA ou la cocamide MIPA ;

- Les tensioactifs amphotères (amphotères vrais comprenant un groupe ioniques et un groupe potentiellement ionique de charge opposée, ou zwitterioniques comprenant simultanément deux charges opposées) peuvent être:

les bétaïnes de manière générale, notamment carboxybétaïnes de par exemple la lauryl bétaïne (Mirataine BB de la société Rhodia) ou l'octylbétaïne ou la cocobétaïne (Mirataine BB-FLA de Rhodia); les amidoalkylbétaïnes, comme la cocamidopropyl bétaïne (CAPB) (Mirataine BDJ de la société Rhodia ou Mirataine BET C-30 de Rhodia) ;
les sulfo-bétaïnes ou sultaines comme la cocamidopropyl hydroxy sultaïne (Mirataine CBS de la société Rhodia) ;
les alkylamphoacétates et alkylamphodiacétates, comme par exemple comprenant une chaîne coco, lauryle (Miranol C2M Conc NP, C32, L32 notamment, de la société Rhodia) ;
les alkylamphopropionates ou les alkylamphodipropionates, (Miranol C2M SF) ; les alkyl amphohydroxypropyl sultaïnes (Miranol CS),
les oxide d'alkyl amines, par exemple lauramine oxide (INCI) ;

- Les tensioactifs cationiques peuvent être les sels d'amines grasses primaires, secondaires ou tertiaires, éventuellement polyethoxylées, les sels d'ammonium quaternaires tels que les chlorures ou les bromures de tetraalkylammonium, d'alkylamidoalkylammonium, de trialkylbenzylammonium, de trialkylhydroxyalkylammonium, ou d'alkylpyridinium, les dérivés d'imidazoline, les oxydes d'amines à caractère cationique. Un exemple de tensioactif cationique est le cetrimonium chloride ou bromide (INCI) ;

- Les tensioactifs employés selon la présente invention peuvent être des copolymères à blocs contenant au moins un bloc hydrophile et au moins un bloc hydrophobe distinct du bloc hydrophile, avantageusement obtenus selon un procédé de polymérisation où :

($a_0$) on met en présence au sein d'une phase aqueuse au moins un monomère hydrophile (respectivement hydrophobe), au moins une source de radicaux libres et au moins un agent de contrôle de polymérisation radicalaire du type -S(C=S)- ;
($a_1$) on met en contact le polymère obtenu à l'issu de l'étape ($a_0$) avec au moins un monomère hydrophobe (respectivement hydrophile) distinct du monomère employé dans l'étape ($a_0$) et au moins une source de radicaux libres;

ce par quoi on obtient un copolymère dibloc.

Des polymères du type tribloc, ou comprenant davantage des blocs, peuvent éventuellement être obtenus en

mettant en oeuvre après l'étape ($a_1$), une étape ($a_2$) dans laquelle, on met en contact le polymère obtenu à l'issu de l'étape (a1) avec au moins un monomère distinct du monomère employé dans l'étape ($a_1$) et au moins une source de radicaux libres ; et plus généralement, en mettant en oeuvre (n+1) étapes du type des étapes ($a_1$) et ($a_2$) précitées et n est un nombre entier allant typiquement de 1 à 3, où dans chaque étape ($a_n$), avec $n \geq 1$ : on met en contact le polymère obtenu à l'issu de l'étape ($a_{n-1}$) avec au moins un monomère distinct du monomère employé dans l'étape ($a_{n-1}$) et au moins une source de radicaux libres. On peut par exemple employer selon l'invention des copolymères du type décrits dans WO03068827, WO03068848 et WO2005/021612.

***Applications pratiques***

Les polymères utiles selon l'invention peuvent être employés dans la quasi-totalité des fluides aqueux mis en oeuvre en extraction pétrolière et potentiellement sujet à la perte de fluide.

Selon un mode de réalisation, le fluide (F) comprend des particules solides (p) et/ou est mis en contact avec des particules solides (p) au sein de la formation souterraine suite à son injection.

Selon un autre mode de réalisation, le fluide (F) injecté sous pression dans une formation souterraine ne comprend pas de particules solides (p).

Selon un mode de réalisation particulier de l'invention le fluide (F) est un coulis de ciment pétrolier, qui comprend le polymère (P) comme additif. Dans ce cas, le polymère (P), associé aux particules présentes dans le ciment, assure l'effet de contrôle du filtrat lors de la cimentation.

Selon un autre mode de réalisation, le fluide (F) est un fluide de forage ou un fluide de fracturation, qui comprend le polymère (P) associé à des particules (p). Les particules (p) sont alors le plus souvent introduites conjointement au polymère dans le fluide (F) avant l'injection du fluide. Le polymère assure alors en général une stabilisation de la dispersion des particules dans le fluide (F), en maintenant en suspension dans le fluide au moins une partie des particules (p).

Les concentrations en polymère et particules à employer dans ces différents fluides sont à adapter au cas par cas en fonction de l'application visée et de la rhéologie recherchée.

Différents aspects et avantages de l'invention seront encore illustrés par les exemples ci-après. Les exemples B à D illustrent l'invention.

## ***Exemples***

### Exemple A Poly(Dimethylacrylamide/AMPS) 60/40 mol% Mw=2000kg/mol (caratérisation SEC MALS) (exemple comparatif)

On a pesé dans un flacon de 1000 mL 7.37g d'acide Mercaptoacétique (solution aqueuse à 1% en masse) 39.34g de Dimethylacrylamide (DMAm), 121.30g de 2-Acrylamido-2-methylpropane sulfonic acid sel de sodium (AMPS) (solution aqueuse à 50% en masse) et 820.57g d'eau déminéralisée. On a agité la solution pendant 2 min à l'aide d'un barreau aimanté, puis on a ajusté le pH à 7.6 à l'aide d'une solution de soude à 20%.

On a chargé cette solution dans un réacteur en verre de 2L muni d'une ancre d'agitation, d'une arrivée d'azote, d'une sonde thermique et d'un réfrigérant. On a dégazé par bullage pendant 1h et chauffer la solution à 62°C. Lorsque la température est stable on a ajouté 3.2g de Tetraethylenepentamine (TEPA) (solution aqueuse à 10% en masse). Après 2 min on a ajouté 8.21g de formaldéhyde sulfoxylate de sodium (NaFS) (solution aqueuse à 30% en masse). On a laissé sous agitation pendant 1h puis vidangé le réacteur.

### Exemple B Poly(Dimethylacrylamide/AMPS/tBS) 59.55/39.7/0.75 mol% nH 20 Mnth 2 000 000g/mol

Etape 1. Préparation d'une solution micellaire de 4-tert-butylstyrene (tBS) avec Sodium docecyl sulfate (SDS) - SOLUTION A

Dans un flacon de 250 mL, on a introduit, à température ambiante (20°C), 27 g de SDS, 103.16g d'eau distillée. On a agité à l'aide d'un barreau aimanté au bain marie (35°C) pendant 1h jusqu'à obtention d'une solution micellaire limpide. On a ajouté alors 4.84g de tBS. Le mélange est agité pendant 1h au bain marie (35°C) jusqu'à l'obtention d'une solution micellaire limpide.

Etape 2. Polymérisation micellaire

Dans un flacon de 2500 mL, on a introduit, à température ambiante (20°C), 210.8g Dimethylacrylamide, 649.9g de 2-Acrylamido-2-methylpropane sulfonic acid sel de sodium(AMPS) (solution aqueuse à 50% en masse), 788g d'eau

distillée, 118.7g de solution A et 5.572g de O-ethyl-S-(1-methoxycarbonyl ethyl) xanthate de formule $(CH_3CH(CO_2CH_3))S(C{=}S)OEt$ (solution à 1% en masse dans l'Ethanol). On a ensuite ajusté le pH du mélange à 6 à l'aide d'une solution d'acide sulfurique (solution aqueuse à 10% en masse).

On a introduit le mélange dans un Dewar de 3L munit d'un couvercle, d'une ancre d'agitation, une sonde de température et une arrivée d'azote. On a dégazé la solution par bullage d'azote pendant 1h. On a ajouté au milieu, en une fois, 18g de formaldéhyde sulfoxylate de sodium (NaFS), sous forme de solution aqueuse à 1% en masse. Après 5 minutes on a ajouté, en une fois, 9g de Sulfate de potassium (KPS), sous forme de solution aqueuse à 5%. Cette solution de KPS a été préalablement dégazée par bullage d'azote pendant 30 minutes.

On a alors laissé la réaction de polymérisation se dérouler, sous agitation jusqu'à 40°C, pendant 24h. On a déchargé le mélangé dans le Dewar revenu à 25°C.

**Exemple C Poly(Dimethylacrylamide/Acrylamide/AMPS/tBS) 39.7/39.7/19.85/0.75 mol% nH 20 Mnth 2 000 000g/mol**

Etape 1. Préparation d'une solution micellaire de 4-tert-butvlstvrene (tBS) avec Sodium docecvl sulfate (SDS) - SOLUTION A

Dans un flacon de 250 mL, on a introduit, à température ambiante (20°C), 40 g de SDS, 152.82g d'eau distillée. On a agité à l'aide d'un barreau aimanté au bain marie (35°C) pendant 1h jusqu'à obtention d'une solution micellaire limpide. On a ajouté alors 7.18g de tBS. Le mélange est agité pendant 1h au bain marie (35°C) jusqu'à l'obtention d'une solution micellaire limpide.

Etape 2. Polymérisation micellaire

Dans un flacon de 2500 mL, on a introduit, à température ambiante (20°C), 266.7g d'Acrylamide (solution aqueuse a 50% en masse), 430.1g de 2-Acrylamido-2-methylpropane sulfonic acid sel de sodium(AMPS) (solution aqueuse à 50% en masse), 186g de Dimethylacrylamide, 726.5g d'eau distillée, 157.1g de solution A et 5.557g de O-ethyl-S-(1-methoxycarbonyl ethyl) xanthate de formule $(CH_3CH(CO_2CH_3))S(C{=}S)OEt$ (solution à 1% en masse dans l'Ethanol). On a ensuite ajusté le pH du mélange à 6 à l'aide d'une solution d'acide sulfurique (solution aqueuse à 10% en masse).

On a introduit le mélange dans un Dewar de 3L munit d'un couvercle, d'une ancre d'agitation, une sonde de température et une arrivée d'azote. On a dégazé la solution par bullage d'azote pendant 1h. On a ajouté au milieu, en une fois, 18g de formaldéhyde sulfoxylate de sodium (NaFS), sous forme de solution aqueuse à 1% en masse. Après 5 minutes on a ajouté, en une fois, 9g de Sulfate de potassium (KPS), sous forme de solution aqueuse à 5%. Cette solution de KPS a été préalablement dégazée par bullage d'azote pendant 30 minutes.

On a alors laissé la réaction de polymérisation se dérouler, sous agitation jusqu'à 40°C, pendant 24h. On a déchargé le mélangé dans le Dewar revenu à 25°C.

**Exemple D Poly(Acrylamide/AMPS/LMAM) 79.4/19.8/0.8 mol% nH 12 Mnth 2 000 000g/mol**

Etape 1. Préparation d'une solution micellaire de Laurylmethacrylamide (LMAm) avec Sodium docecvl sulfate (SDS) - SOLUTION A

Dans un flacon de 500 mL, on a introduit, à température ambiante (20°C), 66 g de SDS, 222.76g d'eau distillée. On a agité à l'aide d'un barreau aimanté au bain marie (35°C) pendant 1h jusqu'à obtention d'une solution micellaire limpide. On a ajouté alors 11.24g de LMAm. Le mélange est agité pendant 2h au bain marie (35°C) jusqu'à l'obtention d'une solution micellaire limpide.

Etape 2. Polymérisation micellaire

Dans un flacon de 2500 mL, on a introduit, à température ambiante (20°C), 586.4g d'Acrylamide (solution aqueuse a 50% en masse), 472.7g de 2-Acrylamido-2-methylpropane sulfonic acid sel de sodium(AMPS) (solution aqueuse à 50% en masse), 429.9g d'eau distillée, 279.1g de solution A et 5.507g de O-ethyl-S-(1-methoxycarbonyl ethyl) xanthate de formule $(CH_3CH(CO_2CH_3))S(C{=}S)OEt$ (solution à 1% en masse dans l'Ethanol). On a ensuite ajusté le pH du mélange à 6 à l'aide d'une solution d'acide sulfurique (solution aqueuse à 10% en masse).

On a introduit le mélange dans un Dewar de 3L munit d'un couvercle, d'une ancre d'agitation, une sonde de température et une arrivée d'azote. On a dégazé la solution par bullage d'azote pendant 1h. On a ajouté au milieu, en une fois, 17.5g de formaldéhyde sulfoxylate de sodium (NaFS), sous forme de solution aqueuse à 1% en masse. Après

5 minutes on a ajouté, en une fois, 8.89g de Sulfate de potassium (KPS), sous forme de solution aqueuse à 5%. Cette solution de KPS a été préalablement dégazée par bullage d'azote pendant 30 minutes.

On a alors laissé la réaction de polymérisation se dérouler, sous agitation jusqu'à 40°C, pendant 24h. On a déchargé le mélangé dans le Dewar revenu à 25°C.

**Evaluation des polymères associatifs dans des coulis de ciment**

Le polymère témoin non associatif décrit dans l'exemple A ainsi que les polymères associatifs issus des exemples B et C sont utilisés pour réaliser des coulis de ciment pétrolier de basse densité 11.5ppg (1ppg=0.1205kg/L) ayant la formulation suivante :

| | |
|---|---|
| Eau de ville : | 477 g |
| Polymère en gel (à 30% en actif) : | 5.3g |
| Anti-mousse organique : | 1 g |
| Ciment Dykheroff black label (API Class G) : | 321,5 g |

L'agent de contrôle de filtrat est mélangé aux additifs liquides et à l'eau de ville avant incorporation du ciment.

La formulation et le test de filtration ont été réalisés selon la norme de l'American Petroleum Institute (API recommended practice for testing well cements 10B, 2nd édition April 2013).

Après mélange et dispersion de l'ensemble des constituants de la formulation, le coulis obtenu a été conditionné à 88°C pendant 20 minutes dans un consistomètre atmosphérique (modèle 1250 fourni par Chandler Engineering Inc.) préalablement stabilisé à cette température, ce qui permet de simuler les conditions subies par le coulis de ciment lors de la descente dans un puits.

La rhéologie des coulis de ciment est ensuite évaluée au moyen d'un viscosimètre rotatif Chandler (model Chann 35) à la température de conditionnement du laitier de ciment. La viscosité est mesurée en fonction du gradient de cisaillement et le profil rhéologique du laitier de ciment est interprété en considérant qu'il s'agit d'un fluide de Bingham. Les grandeurs caractéristiques extraites sont donc la viscosité plastique (PV exprimé en mPa.s) et le seuil d'écoulement (Yield stress exprimé en lb/100ft2). La performance en contrôle de filtrat a été déterminée par une filtration statique à 88°C dans une cellule double ouverture de capacité 175mL équipée de grille métallique 325meshx60mesh (fourni par OFITE Inc., référence 170-45). Les performances des polymères dans les formulations de ciment sont reportées dans le tableau 4 ci-dessous :

Tableau 4 : performances

| référence | FL API vol (mL) | PV (mPa.s) |
|---|---|---|
| A | 260 (calculé) | 6 |
| B | 120 | 22 |
| C | 110 | 24 |
| D | 88 | 21 |

Le volume de « fluide loss » est calculé lorsque le test ne peut être mené pendant 30mn et qu'un passage de l'azote (percolation à travers la cellule de filtration) est observé. Ici l'exemple comparatif A ne peut assurer un contrôle de filtrat correct et l'azote percole à t=20mn. Dans le cas des polymères B, C et D selon l'invention, l'azote ne percole pas pendant les 30mn de test et le volume de filtrat reste faible autour de 100mL.

**Evaluation des polymères associatifs en tant que fluide de fracturation ou de forage de réservoir (drill-in)**

Le polymère de l'exemple D est dispersé à 0.5% en masse dans une solution de KCl à 2%. Le fluide une fois homogénéisé est filtré contre un filtre en céramique de perméabilité de 400mD (fourni par la société Ofite modèle 170-55). La filtration est réalisée pendant 30nm sous une pression de 35bars à une température de 88°C.

La quantité de fluide collecté après 30mn est de 30mL. En l'absence de contrôle de filtration, on attend un volume de l'ordre de 100mL an moins de 1mn.

**Revendications**

1. Utilisation à titre d'agent de contrôle du filtrat dans un fluide (F) aqueux injecté sous pression dans une formation souterraine, de copolymères séquencés amphiphiles comprenant

   - au moins une chaîne (C) soluble dans le fluide (F) aqueux; et
   - une pluralité de blocs (B) non solubles dans le fluide (F) aqueux, chaque bloc (B) étant formé d'une séquence hydrophobe de taille sensiblement identique ;

   dans laquelle la chaîne (C) est obtenue par polymérisation micellaire, et comprend une chaîne majoritairement formée d'unités hydrophiles et interrompue en différents endroits par la pluralité de séquences hydrophobes (B) de taille sensiblement identique.

2. Utilisation selon la revendication 1, dans laquelle la pluralité de blocs (B) représente entre 0,05 et 5% de la masse totale de la chaîne (C).

3. Utilisation selon la revendication 1, dans laquelle la chaîne (C) est obtenue par un procédé comprenant une étape (e) de polymérisation radicalaire micellaire dans laquelle on met en contact, au sein d'un milieu aqueux (M) :

   - des monomères hydrophiles, solubilisés ou dispersés dans ledit milieu aqueux (M) ;
   - des monomères hydrophobes sous la forme d'une solution micellaire, à savoir contenant, à l'état dispersé au sein du milieu (M), des micelles comprenant ces monomères hydrophobes, cet état dispersé étant optionnellement obtenu à l'aide d'au moins un tensioactif ; et
   - au moins un amorceur de polymérisation radicalaire hydrosoluble ou hydrodispersible.

4. Utilisation selon la revendication 1, dans laquelle la chaîne (C) est obtenue par un procédé comprenant une étape (E) de polymérisation radicalaire micellaire dans laquelle on met en contact, au sein d'un milieu aqueux (M) :

   - des monomères hydrophiles, solubilisés ou dispersés dans ledit milieu aqueux (M);
   - des monomères hydrophobes sous la forme d'une solution micellaire, à savoir contenant, à l'état dispersé au sein du milieu (M), des micelles comprenant ces monomères hydrophobes, cet état dispersé étant optionnellement obtenu à l'aide d'au moins un tensioactif ;
   - au moins un amorceur de polymérisation radicalaire hydrosoluble ou hydrodispersible ; et
   - au moins un agent de contrôle de polymérisation radicalaire.

5. Utilisation selon la revendication 3 ou la revendication 4, dans laquelle ledit milieu aqueux (M) est de l'eau et/ou un mélange eau/alcool.

6. Utilisation selon la revendication 4, dans laquelle l'agent de contrôle de polymérisation radicalaire est un composé qui comprend un groupe thiocarbonylthio -S(C=S)-.

7. Utilisation selon la revendication 6, dans laquelle l'agent de contrôle de polymérisation radicalaire est un xanthate.

8. Utilisation selon l'une des revendications 1 à 7, dans laquelle le fluide (F) aqueux injecté comprend des particules solides (p) et/ou mis en contact avec des particules solides (p) au sein de la formation souterraine suite à son injection.

9. Utilisation selon la revendication 8, dans laquelle les particules solides (p) sont des particules de carbonate de calcium ou de ciment.

10. Utilisation selon l'une des revendications 1 à 9, dans laquelle le fluide (F) aqueux est un coulis de ciment pétrolier, qui comprend ledit copolymère séquencé amphiphile comme additif.

11. Utilisation selon l'une des revendications 1 à 9, dans laquelle le fluide (F) aqueux est un fluide de forage ou un fluide de fracturation, qui comprend ledit copolymère séquencé amphiphile associé à des particules solides (p).

## Patentansprüche

1. Verwendung von amphiphilen Copolymeren mit sequenzartigem Aufbau, die Folgendes umfassen

   - mindestens eine Kette (C), die in dem wässrigen Fluid (F) löslich ist; und
   - eine Mehrzahl an Blöcken (B), die in dem wässrigen Fluid (F) unlöslich sind, wobei jeder Block (B) aus einer hydrophoben Sequenz mit im Wesentlichen gleicher Größe gebildet ist;

   als Filtratkontrollmittel in einem wässrigen Fluid (F), das unter Druck in eine unterirdische Formation eingeleitet wird, wobei die Kette (C) durch Mizellen-Polymerisation erhalten wird und eine Kette umfasst, die überwiegend aus hydrophilen Einheiten gebildet ist und an verschiedenen Stellen von der Mehrzahl an hydrophoben Sequenzen (B) mit im Wesentlichen gleicher Größe unterbrochen wird.

2. Verwendung nach Anspruch 1, wobei die Mehrzahl an Blöcken (B) zwischen 0,05 und 5 % der Gesamtmasse der Kette (C) ausmacht.

3. Verwendung nach Anspruch 1, wobei die Kette (C) mittels eines Verfahrens erhalten wird, das einen Schritt (e) der radikalischen Mizellen-Polymerisation (M) umfasst, in welchem Folgendes in einem wässrigen Milieu (M) in Kontakt gebracht wird:

   - hydrophile Monomere, welche in dem wässrigen Milieu (M) in Lösung gebracht oder dispergiert sind;
   - hydrophobe Monomere in Form einer Mizellen-Lösung, die nämlich Mizellen, welche die hydrophoben Monomere umfassen, derart enthält, dass sie in dispergiertem Zustand in dem Milieu (M) vorliegen, wobei dieser dispergierte Zustand möglicherweise mit Hilfe mindestens eines Tensids erzielt wird; und
   - mindestens ein radikalischer Polymerisationsinitiator, der wasserlöslich oder in Wasser dispergierbar ist.

4. Verwendung nach Anspruch 1, wobei die Kette (C) mittels eines Verfahrens erhalten wird, das einen Schritt (E) der radikalischen Mizellen-Polymerisation (M) umfasst, in welchem Folgendes in einem wässrigen Milieu (M) in Kontakt gebracht wird:

   - hydrophile Monomere, welche in dem wässrigen Milieu (M) in Lösung gebracht oder dispergiert sind;
   - hydrophobe Monomere in Form einer Mizellen-Lösung, die nämlich Mizellen, welche die hydrophoben Monomere umfassen, derart enthält, dass sie in dispergiertem Zustand in dem Milieu (M) vorliegen, wobei dieser dispergierte Zustand möglicherweise mit Hilfe mindestens eines Tensids erzielt wird;
   - mindestens ein radikalischer Polymerisationsinitiator, der wasserlöslich oder in Wasser dispergierbar ist; und
   - mindestens ein Mittel zur Steuerung der radikalischen Polymerisation.

5. Verwendung nach Anspruch 3 oder Anspruch 4, wobei es sich bei dem wässrigen Milieu (M) um Wasser und/oder eine Wasser/Alkohol-Mischung handelt.

6. Verwendung nach Anspruch 4, wobei es sich bei dem Mittel zur Steuerung der radikalischen Polymerisation um eine Verbindung handelt, die eine Thiocarbonylthiogruppe - S(C=S)- umfasst.

7. Verwendung nach Anspruch 6, wobei es sich bei dem Mittel zur Steuerung der radikalischen Polymerisation um ein Xanthat handelt.

8. Verwendung nach einem der Ansprüche 1 bis 7, wobei das eingeleitete wässrige Fluid (F) feststoffliche Partikel (p)umfasst und/oder in der unterirdischen Formation, nachdem es eingeleitet wurde, mit feststofflichen Partikeln in Kontakt gebracht wird.

9. Verwendung nach Anspruch 8, wobei es sich bei den feststofflichen Partikeln (p) um Calciumcarbonat oder Zement handelt.

10. Verwendung nach einem der Ansprüche 1 bis 9, wobei es sich bei dem wässrigen Fluid (F) um einen Zementschlamm für die Erdölindustrie handelt, welcher das amphiphile Copolymer mit sequenzartigem Aufbau als Additiv umfasst.

11. Verwendung nach einem der Ansprüche 1 bis 9, wobei es sich bei dem wässrigen Fluid (F) um ein Bohrfluid oder ein Fluid für die hydraulische Frakturierung handelt, welche das amphiphile Copolymer mit sequenzartigem Aufbau

in Verbindung mit feststofflichen Partikeln (p) umfasst.

## Claims

1. Use, as agent for controlling fluid loss in an aqueous fluid (F) injected under pressure into a subterranean formation, of amphiphilic sequential copolymers comprising

   - at least one chain (C) soluble in the aqueous fluid (F); and
   - a plurality of blocks (B) which are insoluble in the aqueous fluid (F), each block (B) being formed of a hydrophobic sequence of substantially identical size;

   in which the chain (C) is obtained by micellar polymerization, and comprises a chain predominantly formed of hydrophilic units interrupted at different points by the plurality of hydrophobic sequences (B) of substantially identical size.

2. Use according to claim 1, wherein the plurality of blocks (B) represents between 0.05% and 5% of the total weight of the chain (C).

3. Use according to claim 1, wherein the chain (C) is obtained by a process comprising a stage (e) of micellar radical polymerization in which the following are brought into contact, within an aqueous medium (M):

   - hydrophilic monomers, dissolved or dispersed in said aqueous medium (M);
   - hydrophobic monomers in the form of a micellar solution, namely a solution containing, in the dispersed state within the medium (M), micelles comprising these hydrophobic monomers, this dispersed state being optionally obtained using at least one surfactant; and
   - at least one radical polymerization initiator which is water-soluble or water-dispersible.

4. Use according to claim 1, wherein the chain (C) is obtained by a process comprising a stage (E) of micellar radical polymerization in which the following are brought into contact, within an aqueous medium (M):

   - hydrophilic monomers, dissolved or dispersed in said aqueous medium (M);
   - hydrophobic monomers in the form of a micellar solution, namely a solution containing, in the dispersed state within the medium (M), micelles comprising these hydrophobic monomers, this dispersed state being optionally obtained using at least one surfactant;
   - at least one radical polymerization initiator which is water-soluble or water-dispersible; and
   - at least one radical polymerization control agent.

5. Use according to claim 3 or claim 4, wherein said aqueous medium (M) is water and/or a water/alcohol mixture.

6. Use according to claim 4, wherein the radical polymerization control agent is a compound which comprises a thiocarbonylthio -S(C=S)- group.

7. Use according to claim 6, wherein the radical polymerization control agent is a xanthate.

8. Use according to one of claims 1 to 7, wherein the injected aqueous fluid (F) comprises solid particles (p) and/or is brought into contact with solid particles (p) within the subterranean formation subsequent to its injection.

9. Use according to claim 8, wherein the solid particles (p) are calcium carbonate or cement particles.

10. Use according to one of claims 1 to 9, wherein the aqueous fluid (F) is an oil cement grout which comprises said amphiphilic sequential copolymer as additive.

11. Use according to one of claims 1 to 9, wherein the aqueous fluid (F) is a drilling fluid or a fracturing fluid, which comprises said amphiphilic sequential copolymer in combination with solid particles (p).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4632186 A
- US 4515635 A
- WO 2015049378 A
- US 4432881 A
- WO 2013060741 A
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- US 4565647 A
- WO 03068827 A
- WO 03068848 A
- WO 2005021612 A


### Littérature non-brevet citée dans la description


- **J.P NGUYEN.** Le Forage. Technip, 1993
- **E.B. NELSON.** Weil Cementing. Elsevier, 2006
- *Polymer,* 1996, vol. 36 (16), 3197-3211
- *Macromolecular Chem. Physics,* 2001, vol. 202 (8), 1384-1397